Europäisches Patentamt

European Patent Office

Office européen des brevets

(19)

(11) Veröffentlichungsnummer: **0 170 231 B1**

(12) **EUROPÄISCHE PATENTSCHRIFT**

(45) Veröffentlichungstag der Patentschrift: **13.03.91**

(51) Int. Cl.⁵: **G01S 1/40**, G01S 1/02

(21) Anmeldenummer: **85109451.6**

(22) Anmeldetag: **27.07.85**

(54) **Doppler-Drehfunkfeuer.**

(30) Priorität: **30.07.84 DE 3428027**
**26.07.85 DE 3526810**

(43) Veröffentlichungstag der Anmeldung:
**05.02.86 Patentblatt 86/06**

(45) Bekanntmachung des Hinweises auf die
Patenterteilung:
**13.03.91 Patentblatt 91/11**

(84) Benannte Vertragsstaaten:
**DE FR GB NL**

(56) Entgegenhaltungen:
**EP-A- 0 034 974**
**EP-A- 0 045 381**
**EP-A- 0 062 761**

(73) Patentinhaber: **Standard Elektrik Lorenz Aktiengesellschaft**
**Lorenzstrasse 10**
**W-7000 Stuttgart 40(DE)**

(72) Erfinder: **Kleiber, Herbert**
**Georg-Kropp-Strasse 19**
**W-7140 Ludwigsburg(DE)**
Erfinder: **Kautz, Werner**
**Engelbergstrasse 1**
**W-7015 Korntal 1(DE)**

(74) Vertreter: **Schmidt, Werner, Dipl.-Phys. et al**
**Standard Elektrik Lorenz AG Patent- und Lizenzwesen Postfach 30 09 29**
**W-7000 Stuttgart 30(DE)**

EP 0 170 231 B1

## Beschreibung

Die Erfindung betrifft ein Doppler-Drehfunkfeuer, wie es beispielsweise in der EP-A-0 034 974 beschrieben ist. In dieser Schrift sind alte Maßnahmen beschrieben, die notwendig sind, um die von einem Doppler-Drehfunkfeuer abgestrahlten Signale zu überwachen. Von einem Doppler-Drehfunkfeuer werden Träger- und Seitenbandsignale abgestrahlt. Die Frequenzen der Seitenbandsignale unterscheiden sich von der Frequenz des Trägersignals um ±9960 Hz. Für eine korrekte Signalabstrahlung ist besonders wichtig, daß die Phase des Trägersignals symmetrisch zu den Phasen der Seitenbandsignale ist. Weiterhin ist es wichtig, entsprechend der einzuhaltenden Spezifikation die Kontinuität der Abstrahlung der 9960-Hz-Seitenbandsignale zu überwachen. Bei der bekannten Einrichtung wird zu diesem Zweck als Sensor zur Überwachung der abgestrahlten Signale eine zusätzliche Antenne verwendet.

Aus der EP-A-0 062 761 ist ein Doppler-Drehfunkfeuer bekannt, bei dem die Kontinuität der Abstrahlung der Signale überwacht wird, ohne eine zusätzliche Antenne verwenden zu müssen. Auch zur Überwachung der vorgeschriebenen Phasenbeziehung zwischen den verschiedenen Sendesignalen ist keine zusätzliche Antenne erforderlich. Die bekannte Einrichtung hat den Nachteil, daß sie hinsichtlich der Auflösegenauigkeit der überwachten Parameter nicht optimal arbeitet.

Aufgabe der Erfindung ist es, ein Doppler-Drehfunkfeuer bereitzustellen, dessen Überwachungseinrichtung mit höherer Auflösung arbeitet, so daß die vom Doppler-Drehfunkfeuer abgestrahlten Signale die geforderten Spezifikationen besser erfüllen.

Gelöst wird diese Aufgabe durch eine Vorrichtung mit der Merkmalskombination der unabhängigen Ansprüche.

Die Vorteile der Erfindung liegen darin, daß trotz der höheren Auflösung kein größerer Bauteileaufwand erforderlich ist, da zur Auswertung ein Mikroprozessor herangezogen wird.

Ausführungsbeispiele der Erfindung werden anhand der Figuren 1 bis 3 näher erläutert. Es zeigen:

Fig. 1  ein Blockschaltbild des neuen Doppler-Drehfunkfeuers,

Fig. 2  ein Blockschaltbild eines weiteren Ausführungsbeispiels, und

Fig. 3  ein weiteres Ausführungsbeispiel für einen Teil des Doppler-Drehfunkfeuers nach Fig. 2.

Ein in einer Trägersignalquelle 11 erzeugtes "Trägersignal" (CSB), welches Träger- und Seitenbandsignale enthält (nachfolgend als Trägersignal bezeichnet), wird von einer Trägerantenne 2 und die in Seitenbandsignalquellen 8, 9 erzeugten Seitenbandsignale (USB, LSB) werden von Seitenbandantennen 1 abgestrahlt. Die Seitenbandantennen sind kreisförmig angeordnet und die Trägerantenne befindet sich im Kreismittelpunkt.

Bei einem Zueiseitenband-DVOR werden die Seitenbandsignale (oberes Seitenband: USB; unteres Seitenband: LSB) den Seitenbandantennen so zugeführt, daß die Bewegungen von zwei Strahlungsquellen, die sich auf dem Kreis gegenüberliegen, simuliert werden. Die eine Seitenbandantenne strahlt das obere und die andere das untere Seitenband ab.

Um zu gewährleisten, daß eine möglichst kontinuierliche Strahlungsquellenbewegung simuliert wird, erfolgt von einer Seitenbandantenne zu ihrer benachbarten Seitenbandantenne keine harte Umschaltung, wobei unter harter Umschaltung verstanden wird, daß zunächst die eine und anschließend die andere Antenne wirksam geschaltet ist.

Eine weiche Umschaltung erreicht man dadurch, daß die Seitenbandsignale jeweils zwei benachbarten Antennen zugeführt und die Seitenbandsignale geeignet amplitudenmoduliert werden. Zur Amplitudenmodulation der beiden Seitenbandsignale sind jeweils zwei Amplitudenmodulatoren 4,41 und 5,51 vorgesehen.

Das Weiterschalten der Seitenbandsignale von Antenne zu Antenne wird durch ein Antennenschaltgerät 3 bewirkt.

Bei Navigationssendeeinrichtungen ist es besonders wichtig, daß die abgestrahlten Signale ihre vorgeschriebenen Werte einhalten und daß die Signalabstrahlung kontinuierlich erfolgt. Deshalb sind überwachungseinrichtungen vorgesehen, die dies kontinuierlich überwachen.

Bei dem von einem DVOR abgestrahlten Navigationssignal muß die Phase der Trägerschwingung des von der Trägerantenne 2 abgestrahlten Signals symmetrisch zwischen den Phasen der Trägerschwingungen der von auf dem Kreis einander gegenüberliegend angeordneten Seitenbandantennen abgestrahlten Signale liegen. Um dies zu überwachen, wird wie nachfolgend beschrieben vorgegangen.

Koppler koppeln jeweils einen geringen Teil USB', LSB' der von den Seitenbandsignalquellen erzeugten Seitenbandsignale aus und führen diese Teile Mischern 14 und 15 zu.

Die Seitenbandantennen 1 strahlen nicht nur die Seitenbandsignale ab, sondern empfangen auch das von der Trägerantenne 2 abgestrahlte Trägersignal. Dieses Trägersignal durchläuft die Speiseleitungen 100, 200 der Seitenbandsignale von den Signalquellen zu den Antennen in umgekehrter Richtung. Entsteht auf dem Weg eines Seitenbandsignals von Signalquelle zur Antenne eine Phasenverschiebung der Trägerschwingung des Seitenbandsignals, dann wird auch das von der Seitenbandantenne empfangene und weitergeleitete Signal um den gleichen Betrag phasenverschoben.

Weitere Koppler koppeln aus den Speiseleitungen 100, 200 jeweils einen Teil T' des Trägersignals, das von den Seitenbandantennen empfangen wurde, aus und führen diese Teile als jeweils zweites Eingangssignal den Mischern 14 und 15 zu.

Anstelle zur Auskopplung von Träger- und Seitenbandanteilen jeweils zwei Koppler zu verwenden können auch bidirektionale Koppler 600 und 700 verwendet werden. Die Ausgänge des Kopplers 600 sind mit 6 (Auskopplung eines Teils T' des Trägersignals) und 61 (Auskopplung eines Teiles USB' des Seitenbandsingals) bezeichnet; die Ausgänge des Koppler 700 mit 7 und 71.

Zur elektrischen Anpassung der Bauelement an die Seitenbandsignalquellen 8, 9 sind in den Speiseleitungen 100 und 200 Zirkulatoren 302 und 303 vorgesehen.

Die Ausgangssignale der Mischer 14, 15 sind Signale, deren Frequenz gleich der Frequenzdifferenz von Trägersignal und Seitenbandsignal ist; bei einem DV0R ist diese Frequenz 9.960 Hz. Die jeweilige Phasendifferenz zwischen Trägersignal und einem Seitenbandsignal wird (wie sich aus einem Zeigerdiagramm ergibt) auf das Ausgangssignal des betroffenen Mischers abgebildet. Die abgebildete Phasendifferenz ist die Phasendifferenz im Strahlungsfeld, weil das zum Mischen verwendete Trägersignal das von der Trägerantenne abgestrahlte Signal und nicht ein direkt vom Trägersender ausgekoppeltes Signal ist und weil das von den Seitenbandantennen empfangene Trägersignal auf dem Weg von der Antenne zum Koppler denselben Weg durchläuft wie das Seitenbandsignal.

Die Ausgangssignale der Mischer 14, 15 werden über Filter 141, 151 einer Phasenmeßeinrichtung 16 zugeführt. Haben die Trägerschwingungen zueinander die vorgeschriebenen Phasenbeziehungen, dann wird in der Phasenmeßeinrichtung 16 die Phasendifferenz null oder 180° gemessen (oder, falls die Kabellängen nicht alle gleich sind, bekannte Abweichungen hiervon). Das Ausgangssignal der Phasenmeßeinrichtung wird einem Mikroprozessor 301 in einer Überwachungseinrichtung zugeführt, in dem das Meßergebnis der Phasenmeßeinrichtung mit dem Sollwert, der der Phasendifferenz null oder 180° entspricht, verglichen wird. Weicht das Meßergebnis so weit vom Sollwert ab, daß es nicht mehr innerhalb der zugelassenen Grenzen liegt, dann erfolgt eine Alarmmeldung in einer nicht dargestellten Anzeigeeinrichtung.

Der Mikroprozessor ist weiterhin mit einer nicht dargestellten Bedienungseinrichtung verbunden.

Bei der Inbetriebnahme der Anlage kann die Anzeige, daß die Phasendifferenz vom Sollwert abweicht, zur Einstellung der oben erwähnten vorgeschriebenen Phasenbeziehungen ausgenutzt werden.

Weiterhin werden die ausgekoppelten Seitenbandsignale USB' und LSB' weiteren Mischern 14' und 15' zugeführt. Diese Mischer erhalten als jeweils zweites Eingangssignal von einem Richtkoppler 10, der zwischen die Signalquelle 11 für das CSB-Signal und die Mittelantenne 2 eingefügt ist, einen Teil T'' des Trägersignals T.

Die Mischerausgangssignale werden über Bandpässe 141' und 151', deren Durchlaßbereiche bei 9.960 Hz liegen, der Phasenmeßeinrichtung 16 zugeführt. Der Mikroprozessor 301 steuert die Phasenmessung im der Phasenmeßeinrichtung 16 so, daß im Zeitmultiplex die Phasendifferenz zwischen den Ausgangssignalen der Mischer 14 und 15 oder zwischen den Ausgangssignalen der weiteren Mischer 14' und 15' gemessen wird.

Die Phasendifferenzmessung zwischen den Ausgangssignalen der Mischer 14 und 15 erfolgt ungefähr 10 mal so häufig wie die Messung der anderen Phasendifferenz. Abhängig von der Abweichung der gemessenen Phasendifferenz zwischen den Ausgangssignalen der weiteren Mischer 14' und 15' von ihrem Sollwert erfolgt in den Seitenbandsignalquellen 8 und 9 eine Phasenregelung. Damit wird gewährleistet, daß die Sendesignale die vorgeschriebene Phasenrelation aufweisen.

Die Ausgangssignale der Mischer 14 und 15 werden über die Filter 141 und 151 einer Summierstufe 300 zugeführt, deren Ausgangssignal zu einer Multiplexeinrichtung 306 geleitet wird.

Die Multiplexeinrichtung 306 wird von dem Mikroprozessor 301 gesteuert. Das Ausgangssignal der Multiplexeinrichtung 306 wird dem Mikroprozessor 301 über einen A/D-Wandler 307 zugeführt. Dessen Abtastrate beträgt z. B. 960 Hz.

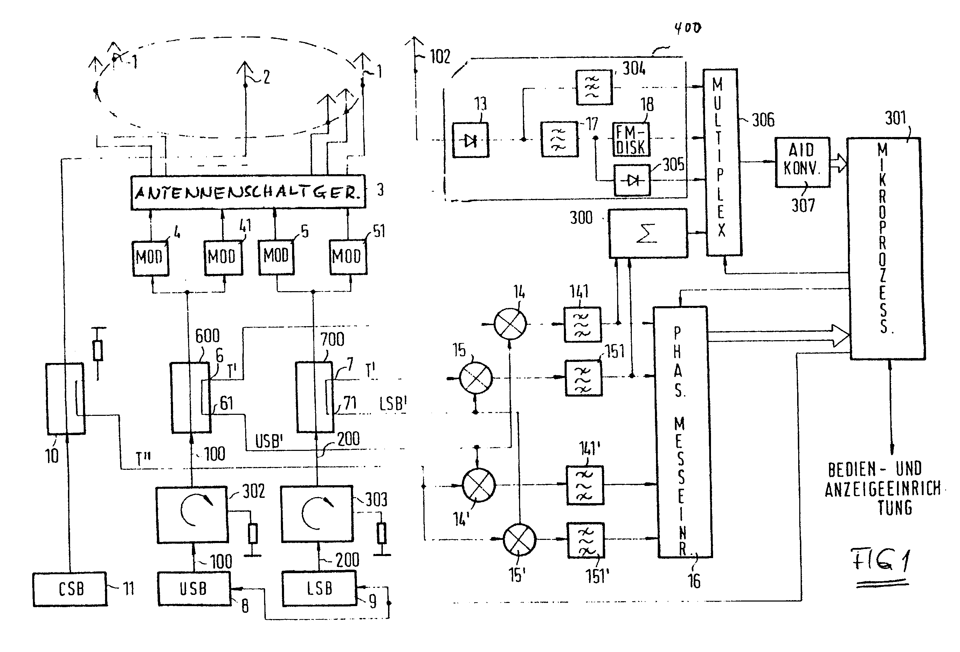

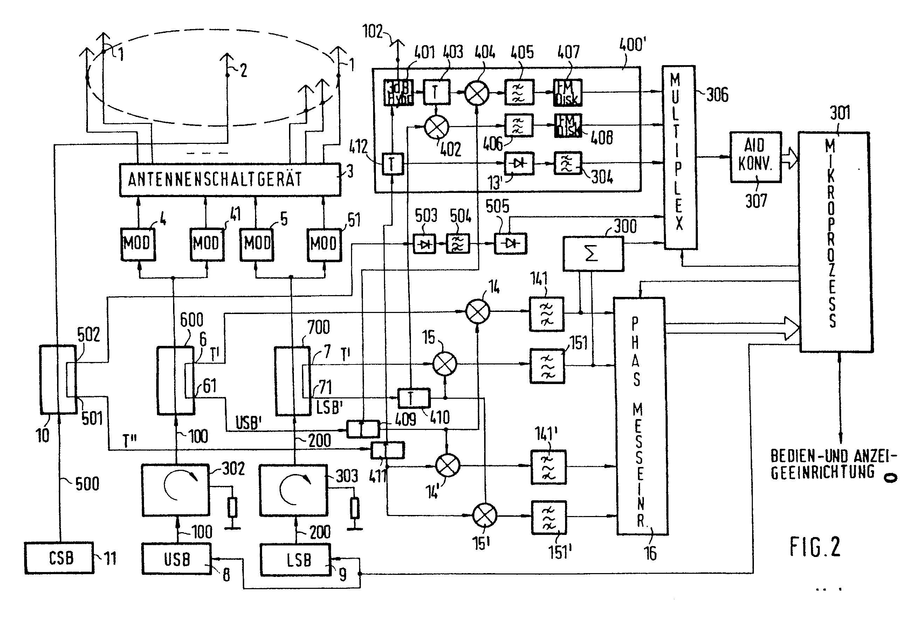

Zur Überwachung der abgestrahlten Signale ist weiterhin ein Überwachungsdipol 102 vorgesehen, dem eine Baugruppe 400 (Fig. 1) oder 400' (Fig. 2), die nachfolgend näher erläutert werden, nachgeschaltet ist. Die Ausgangssignale der Baugruppe 400 oder 400' werden der Multiplexeinrichtung 306 zugeführt.

Zunächst wird im Zusammenhang mit der Fig. 1 die Baugruppe 400 näher erläutert. Die von dem Überwachungsdipol 102 empfangenen Signale werden in nicht dargestellten Einrichtungen gefiltert und verstärkt und danach in einem Präzisionsdemodulator 13 gleichgerichtet.

Das Ausgangssignal des Präzisionsdemodulators, das dem kompletten von dem Doppler-Drehfunkfeuer abgestrahlten Signal entspricht, wird mittels Filter 304 und 17 in die Anteile "30 Hz AM" und "9.960-Hz-Signal" aufgeteilt. Das 9.960-Hz-Signal wird einerseits einem FM-Diskriminator 18, der die 30 Hz Fm wiedergewinnt, und andererseits einem Demodulator 305, zugeführt. Die so erzeugten drei Signale, nämlich das 30-Hz-AM-Signal, das 30-Hz-FM-Signal und das gleichgerichtete 9.960-Hz-Signal werden der Multiplexeinrichtung 306 zugeführt. Diese Signale sind die bei dem Doppler-Drehfunkfeuer DVOR und auch bei dem Drehfunkfeuer VOR zu überwachenden Signale.

Der Mikroprozessor in der Auswerteschaltung führt für alle ihm im Zeitmultiplex zugeführten Signale eine diskrete Fourieranalyse (DFT) durch. Für jedes Signal werden die Ausgänge des DFT-Algorithmus für Gleichanteil, 30 Hz, 60 Hz, 90 Hz, 120 Hz und 150 Hz gebildet. Der 30 Hz-Anteil bezogen auf den Gleichanteil des 30-Hz-AM-Signals ist der Modulationsgrad für dieses Signal. Der Gleichanteil dieser Analyse entpricht dem Feldstärkepegel des über den Dipol 102 empfangenen Signals. Die Analyse des 30-Hz-FM-Signals ergibt an dem 30-Hz-Ausgang den Hub auf dem 9.960-Hz-Hilfsträgersignal. Weiterhin ist es möglich, zusätzlich die Oberwellen des 30-Hz-FM-Signals auszuwerten. Der Gleichanteil des gleichgerichteten 9.960-Hz-Signals ist ein Maß für den Pegel der Seitenbandsignale. Die 30-Hz-Harmonischen dieser Analyse sind ein Maß für die Störmodulation auf diesem Signal. Nach ICAO Annex 10 sind bei DVOR hierfür 40 % zugelassen. Ändert sich der Betrag der Störmodulation, dann weiß man, daß sich an der Seitenbandsignalabstrahlung etwas verändert hat, z.B. Ausfall von einer oder mehreren Antennen.

Die Summe der 30-Hz-Harmonischen des Ausgangssignals der Summierstufe 300 bildet ein Maß für die kontinuierliche Seitenbandabstrahlung. Ändert sich die Summe, dann weiß man, daß die Abstrahlung gestört ist. Gesteuert durch den Mikroprozessor 301 wird die Störung angezeigt, auf einen Reservesender umgeschaltet, oder, falls erforderlich, die Anlage abgeschaltet.

Im Mikroprozessor sind für die einzelnen zu überwachenden Parameter Alarmgrenzen vorgegeben. Beim Überschreiten dieser Alarmgrenzen werden Alarmanzeigen wirksam und es wird gegebenenfalls auf den Reservesender umgeschaltet oder die gesamte Anlage abgeschaltet. Die Alarmgrenzen werden bei der Inbetriebnahme der Anlage eingestellt.

In der Baugruppe 400' wird das von dem Überwachungsdipol 102 empfangene Signal einem 3dB-Hybrid 401 zugeführt. Dem 3dB-Hybrid wird außerdem ein Teil des von dem Richtkoppler 10 ausgekoppelten Trägersignals T" über weitere Leistungsteiler 411 und 412 zugeführt. Der Leistungsteiler 411 ist zwischen den Richtkoppler 10 und die weiteren Mischer 14', 15' eingefügt. Die Leistungsteiler 411 und 412 können jeweils ein 3dB-Hybrid sein. Das Ausgangssignal des 3dB-Hybrids 401 wird in einem Leistungsteiler 403, der ebenfalls als 3dB-Hybrid realisiert werden kann, auf zwei Mischer 402 und 404 aufgeteilt. Den beiden Mischern wird jeweils ein Teil des oberen und ein Teil des unteren Seitenbandsignals zugeführt. Diese Anteile werden mittels Leistungsteiler 409, 410 aus den Ausgangssignalen der Richtkoppler 600 und 700 abgezweigt. Diese Leistungsteiler können ebenfalls als 3dB-Hybride realisiert sein. Die Mischerausgangssignale werden über jeweils einen Bandpaß 405, 406 Frequenzdiskriminatoren 407, 408 zugeführt. Die Mittenfrequenzen der Bandpässe sind jeweils ungefähr gleich dem Doppelten des Betrags, um den sich die Frequenzen der Seitenbandsignale von der Frequenz des Trägersignals unterscheiden, d.h. ungefähr gleich 20 kHz.

Die Überlagerung im ersten 3dB-Hybrid 401 erfolgt vorzugsweise so, daß das Trägersignal kompensiert wird und somit enthält das Ausgangssignal nur noch Seitenbandsignale. Die Ausgangssignale der FM-Diskriminatoren sind Abbilder des oberen und unteren Seitenbands und daher geeignet, die Frequenzmodulation des oberen und des unteren Seitenbands zu überwachen. Die Überwachung erfolgt in dem Mikroprozessor der Auswerteschaltung 301.

Wie bereits erwähnt ist der Richtkoppler 10 ein Bidirektionaler Richtkoppler. Über seinen einen Ausgang 501 wird der ebenfalls bereits erwähnte Teil T" des Trägersignals ausgekoppelt. Über seinen anderen Ausgang 502 werden die von der Trägerantenne 2 empfangenen Seitenbandsignale ausgekoppelt.

Zur Überwachung der 30-Hz-Amplitudenmodulation wird ein Teil des von dem Richtkoppler 10 ausgekoppelten Trägersignals T" über die Leistungsteiler 411 und 412 einem Gleichrichter 13' und einem Tiefpaß 304 zugeführt. Das Ausgangssignal des Tiefpasses gelangt über den Multiplexer 306 zu dem Mikroprozessor 301. Der Leistungsteiler 412, der Gleichrichter 13' und der Tiefpaß 304 gehören zu der Baugruppe 400'.

Die von dem Richtkoppler 10 über den Ausgang 502 ausgekoppelten Seitenbandsignale werden über einen Gleichrichter 503, einen Bandpaß 504 (Mittenfrequenz 9.960 Hz) und einen weiteren Gleichrichter 505 ebenfalls über die Multiplexeinrichtung 306 der Auswerteschaltung 301 zugeführt. Dieses Signal dient zur Überwachung der Pegel der Seitenbandsignale.

Der Mikroprozessor in der Auswerteschaltung führt wieder für alle ihm im Zeitmultiplex zugeführten Signale eine diskrete Fourieranalyse (DFT) durch. Für jedes Signal werden die Ausgänge des DFT-Algorithmus für Gleichanteil, 30 Hz, 60 Hz, 90 Hz, 120 Hz und 150 Hz gebildet. Der 30-Hz-Anteil bezogen auf den Gleichanteil des 30-Hz-AM-Signals ist der Modulationsgrad für dieses Signal.

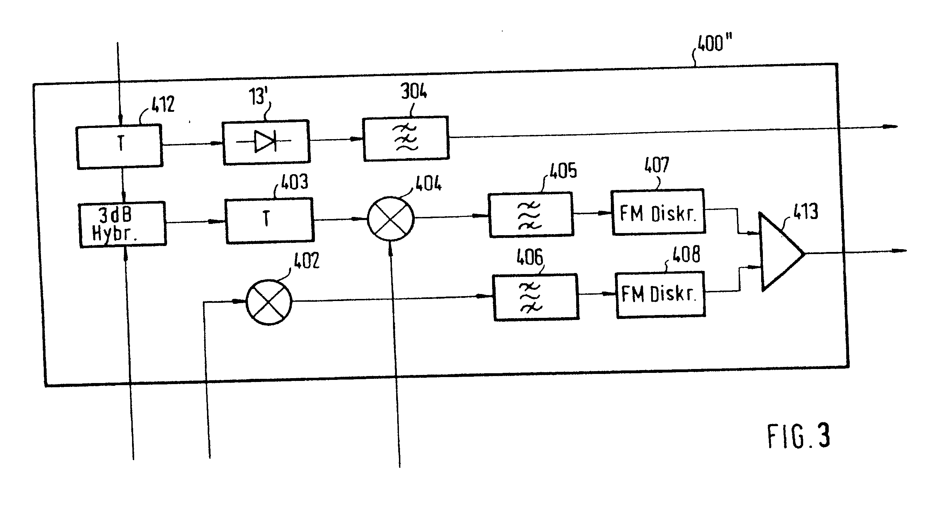

Der Gleichanteil dieser Analyse entpricht dem Feldstärkepegel des über den Dipol 102 empfangenen Signals. Dies gilt für den Fall, daß das Trägersignal dem vom Überwachungsdipol empfangenen Signal entnommen wird. Wird der erforderliche Teil des Trägersignals unmittelbar dem von der Trägersignalquelle abgegebenen Signal entnommen, dann gilt dies sinngemäß. Die Analyse des 30-Hz-FM-Signals ergibt an dem 30-Hz-Ausgang den Hub auf dem 9.960-Hz-Hilfsträgersignal (Ausführungsbeispiel nach Fig. 3; beim Ausführungsbeispiel nach Fig. 2 ist das diesem Signal entsprechende FM-Signal zwei mal vorhanden). Weiterhin ist es möglich, zusätzlich die Oberwellen des 30-Hz-FM-Signals auszuwerten. Der Gleichanteil des gleichgerichteten 9.960-Hz-Signals ist ein Maß für den Pegel der Seitenbandsignale. Die 30-Hz-Harmonischen dieser Analyse sind ein Maß für die Störmodulation auf diesem Signal.

Anstelle die Ausgangssignale der Frequenzdiskriminatoren 407, 408 direkt über den Multiplexer dem Mikroprozessor 301 zuzuführen ist es auch möglich, die Ausgangssignale einem Differenzverstärker 413 zuzuführen. In diesem Fall wird das Ausgangssignal des Differenzverstärkers 413 über den Multiplexer dem Mikroprozessor zugeführt und dort überwacht. Diese Variante ist in der Fig. 2 dargestellt. In der Fig. 3 ist in der Baugruppe 400" auch eine Variante zur Amplitudenmodulationsüberwachung dargestellt. Dem Leistungsteiler 412, dem wiederum der Gleichrichter 13' und der Tiefpaß 304 nachgeschaltet sind, wird in diesem Fall das von dem Überwachungsdipol 102 empfangene Signal zugeführt.

Es ist weiterhin möglich, der Baugruppe 400' oder 400" einen weiteren Multiplexer vorzuschalten, an den mehrere an räumlich unterschiedlichen Stellen angeordnete Überwachungsdipole anschließbar sind. Dann ist es möglich, im Zeitmultiplex die abgestrahlten Signale in unterschiedlichen Raumrichtungen zu überwachen.

**Ansprüche**

1. Doppler-Drehfunkfeuer (DVOR) mit mehreren kreisförmig angeordneten Seitenbandantennen (1), mit einer im Kreismittelpunkt angeordneten Trägerantenne (2), bei dem Seitenbandsignalquellen (8, 9) und ein zwischen diesen Seitenbandsignalquellen und den Seitenbandantennen (1) angeordnetes Antennenschaltgerät (3) vorgesehen sind, um ein oberes Seitenbandsignal (USB) und ein unteres Seitenbandsignal (LSB) den Seitenbandantennen zuzuführen, bei dem zur Überwachung der abgestrahlten Signale eine Überwachungseinrichtung vorgesehen ist, wobei die Überwachungseinrichtung eine Auswerteschaltung (301), mehrere Richtkoppler und mehrere Mischer enthält, nämlich einen ersten Richtkoppler, der einen geringen Teil (USB') des oberen Seitenbandsignales (USB) auskoppelt und zu einem ersten der Mischer (14) leitet, einen zweiten Richtkoppler, der einen geringen Teil (LSB') des unteren Seitenbandsignals (LSB) auskoppelt und zu einem zweiten der Mischer (15) leitet, einen dritten Richtkoppler, der einen ersten Teil (T') des von einer Seitenbandantenne (1) empfangenen Trägersignals aus einer ersten Speiseleitung (100), über die das Trägersignal von der Antenne aus weitergeleitet wird, auskoppelt und zu dem ersten (14) der beiden Mischer leitet, bei dem in der Überwachungseinrichtung eine Phasenvergleichseinrichtung (16) enthalten ist, zu der die Mischerausgangssignale weitergeleitet werden und in der die Phasendifferenz zwischen den Mischerausgangssignalen ermittelt wird, und bei dem die Auswerteschaltung so angeordnet wird, daß die Abweichungen der gemessenen Phasendifferenz von einem Sollwert ermittelt werden, **dadurch gekennzeichnet**, daß die Überwachungseinrichtung zumindest einen vierten Richtkoppler enthält, der einen zweiten Teil (T') des von einer Seitenbandantenne (1) empfangenen Trägersignals auf einer zweiten Speiseleitung (200) für das zweite der beiden Seitenbandsignale auskoppelt und diesen zu dem zweiten der beiden Mischer leitet, und daß die Überwachungseinrichtung zusätzlich eine mit den beiden Mischerausgängen verbundene Summierstufe (300) enthält, und daß die Auswerteschaltung so angeordnet ist, daß eine Fourieranalyse des Ausgangssignales der Summierstufe (300) durchgeführt wird, so daß beim Ausfall einer oder mehrerer Seitenbandantennen (1) sich diese Signalanalyse ändert, wodurch der Ausfall angezeigt wird.

2. Doppler-Drehfunkfeuer nach Anspruch 1, gekennzeichnet durch ein weiteres Mischerpaar (14', 15'), bestehend aus einem Mischer (14'), dem ein Teil des Trägersignals und ein Teil des oberen Seitenbandsignals, und bestehend aus einem Mischer (15'), dem ein Teil des Trägersignals und ein Teil des unteren Seitenbandsignals zugeführt wird, weiterhin gekennzeichnet durch einen weiteren Koppler (10), der in die Speiseleitung für die im Kreismittelpunkt angeordnete Trägerantenne (2) eingefügt ist, und der einen Teil (T") des Trägersignales auskoppelt, der dem weiteren Mischerpaar zugeführt wird, und daß eine Phasenmeßeinrichtung (16) vorgesehen ist, die die Phasendifferenz zwischen den Ausgangssignalen der Mischer (14', 15') mißt.

3. Doppler-Drehfunkfeuer nach Anspruch 2, gekennzeichnet durch eine Regelung der Phasen der Seitenbandsignale in den Seitenbandsignalquellen (8, 9), falls die gemessene Phasendifferenz von einem Sollwert abweicht.

4. Doppler-Drehfunkfeuer nach einem der Ansprüche 1 bis 3, gekennzeichnet durch eine Überwachung der Amplitudenmodulation des Trägersignals, eine Überwachung des Frequenzhubes des FM-Signales und eine Überwachung des Modulationsgrades des 9960-Hz-Hilfsträgersignales, zusätzlich zur Fourieranalyse des Ausgangssignales der Summierstufe.

5. Doppler-Drehfunkfeuer nach Anspruch 4, dadurch gekennzeichnet, daß die Überwachung im Zeitmultiplex erfolgt.

6. Doppler-Drehfunkfeuer nach einem der Ansprüche 1 bis 5, gekennzeichnet durch einen Schwellwert für den Betrag der Summe der Harmonischen des gleichgerichteten 9960-Hz-Hilfsträgers, dessen Überschreiten den Ausfall einer oder mehrerer Antennen anzeigt.

7. Doppler-Drehfunkfeuer nach einem der Ansprüche 1 bis 6, dadurch gekennzeichnet, daß die Richtkoppler (6, 101 61, 7, 71), bidirektionale Richtkoppler (10, 600, 700) sind.

8. Doppler-Drehfunkfeuer nach einem der Ansprüche 2 bis 7, dadurch gekennzeichnet, daß die Phasenmessung zwischen den Ausgangssignalen der ersten Mischer (14, 15) und den Ausgangssignalen der weiteren Mischer (14', 15') im Zeitmultiplex erfolgt und zwar dergestalt, daß die Messung der Phasendiffernez zwischen den Ausgangssignalen der ersten Mischer häufiger erfolgt als die Phasenmessung zwischen den Ausgangssignalen der weiteren Mischer.

9. Doppler-Drehfunkfeuer (DVOR) mit mehreren kreisförmig angeordneten Seitenbandantennen (1), mit einer im Kreismittelpunkt angeordneten Trägerantenne (2), bei dem Seitenbandsignalquellen (8, 9) und ein zwischen diesen Seitenbandsignalquellen und den Seitenbandantennen (1) angeordnetes Antennenschaltgerät (3) vorgesehen sind, um ein oberes Seitenbandsignal (USB) und ein unteres Seitenbandsignal (LSB) den Seitenbandantennen zuzuführen, bei dem zur Überwachung der abgestrahlten Signale eine Überwachungseinrichtung vorgesehen ist, wobei die Überwachungseinrichtung eine Auswerteschaltung (301), mehrere Richtkoppler und mehrere Mischer enthält, nämlich einen ersten Richtkoppler, der einen geringen Teil (USB') des oberen Seitenbandsignales (USB) auskoppelt und zu einem ersten der Mischer (14) leitet, einen zweiten Richtkoppler, der einen geringen Teil (LSB') des unteren Seitenbandsignales (LSB) auskoppelt und zu einem zweiten der Mischer (15) leitet, und mindestens einen dritten Richtkoppler, der einen Teil (T') des von einer Seitenbandantenne (1) empfangenen Trägersignals aus einer Speiseleitung (100), über die das Trägersignal von der Antenne aus weitergeleitet wird, auskoppelt und zu dem ersten (14) der beiden Mischer leitet, bei dem in der Überwachungseinrichtung ein Überwachungsdipol (102) und eine Phasenvergleichseinrichtung (16) enthalten sind, zu der die Mischerausgangssignale weitergeleitet werden und in der die Phasendifferenz zwischen den Mischerausgangssignalen ermittelt wird, und bei dem die Auswerteschaltung so angeordnet wird, daß die Abweichungen der gemessenen Phasendifferenz von einem Sollwert ermittelt werden, **dadurch gekennzeichnet,** daß die Überwachungseinrichtung ein 3dB-Hybrid, einen dritten (402) und einen vierten (404) Mischer, zwei Bandpässe (405, 406) und zwei Frequenzdiskriminatoren (407, 408) enthält, daß das von dem Überwachungsdipol (102) empfangene Signal einem ersten Eingang des 3dB-Hybrides (401) zugeführt wird, daß der zweite Eingang des 3dB-Hybrides einen Teil des Trägersignales erhält, daß das Ausgangssignal des 3dB-Hybrides jeweils dem ersten Eingang des dritten und vierten Mischers (402, 404) zugeführt wird, daß dem zweiten Eingang des dritten Mischers (402) der geringe Teil des unteren und dem zweiten Eingang des vierten Mischers (404) der geringe Teil des oberen Seitenbandsignales jeweils zugeführt wird, daß das Ausgangssignal des dritten und vierten Mischers jeweils dem zugeordneten Bandpaß (405, 406) zugeführt wird, daß die Mittenfrequenzen der Bandpässe ungefähr gleich dem doppelten des Wertes sind, um den sich die Frequenz der Seitenbandsignale von der Frequenz des Trägersignales unterscheiden, daß das Ausgangssignal jedes Bandpasses jeweils dem zugeordneten Frequenzdiskriminator (407, 408) zugeführt wird, und daß die Auswerteschaltung so angeordnet ist, daß eine Fourieranalyse der Ausgangssignale der Frequenzdiskriminatoren durchgeführt wird.

10. Doppler-Drehfunkfeuer nach Anspruch 9, gekennzeichnet durch einen zwischen den Frequenzdiskriminatoren (407, 408) und der Auswerteschaltung liegenden Differenzverstärker (413), dessen Eingang mit den Ausgängen der Frequenzdiskriminatoren und dessen Ausgang mit der Auswerteschaltung verbunden ist.

11. Doppler-Drehfunkfeuer nach Anspruch 9 oder 10, gekennzeichnet durch Auskopplung nur eines Teiles des Trägersignales zur Überwachung der Parameter HF-Pegel des Trägersignals, 30-Herz-Amplitudenmodulation des Trägersignals und das Vorhandensein der Stationskennung, wobei die Auswerteschaltung das gleichgerichtete Trägersignal auswertet.

12. Doppler-Drehfunkfeuer nach Anspruch 1, dadurch gekennzeichnet, daß der Überwachungsdipol (102) das Trägersignal liefert.

13. Doppler-Drehfunkfeuer nach Anspruch 11, dadurch gekennzeichnet, daß die zwischen Trägersignalquelle (11) und Trägerantenne (2) befindliche Speiseleitung (500) den Teil (T'') des Trägersignals liefert.

14. Doppler-Drehfunkfeuer nach einem der Ansprüche 9 bis 13, dadurch gekennzeichnet, daß die Auswerteschaltung zur Überwachung des Pegels des abgestrahlten oberen und des abgestrahlten unteren Seitenbandsignales, welche von der Trägerantenne (2) empfangen werden, die aus der Speiseleitung (500) zwischen Trägersignalquelle (11) und Trägerantenne (2) ausgekoppelten und in einem Gleichrichter (503) gleichgerichteten Signale auswertet.

## Claims

1. Doppler very high frequency omnidirectional range (DV0R) comprising a plurality of sideband antennas (1) arranged about the perimeter of a circle and a carrier antenna (2) located at the center of said circle wherein sideband-signal sources (8, 9) and an antenna switching unit (3) interposed between said sideband-signal sources and the sideband antennas (1) are provided for applying an upper sideband signal (USB) and a lower sideband signal (LSB) to the sideband antennas, wherein a monitoring facility is provided for monitoring the radiated signals, said monitoring facility including an evaluating circuit (301), two or more directional couplers, and two or more mixers, namely a first directional coupler which couples out a small portion (USB') of the upper sideband signal (USB) and feeds it to a first one (14) of the mixers, a second directional coupler which couples out a small portion (LSB') of the lower sideband signal (LSB) and feeds it to a second one (15) of the mixers, and a third directional coupler which couples a first portion (T') of the carrier signal received by a sideband antenna (1) out of a first feeder (100) over which the carrier signal is transferred from the antenna, and feeds it to said first one (14) of the two mixers, wherein the monitoring facility further includes a phase comparator (16) to which the mixer output signals are applied and in which the phase difference between the mixer output signals is determined, and wherein the evaluating circuit is arranged to determine the deviations of the measured phase difference from a desired value, **characterized in** that the monitoring facility includes at least a fourth directional coupler which couples a second portion (T') of the carrier signal received by a sideband antenna (1) out of a second feeder (200) for the second one of the two sideband signals, and feeds said second portion (T') to the second one of the two mixers, that the monitoring facility further includes a summing stage (300) connected to the outputs of the two mixers, and that the evaluating circuit is arranged to perform a Fourier analysis of the output signal from the summing stage (300), so that in the event of a failure of one or more sideband antennas (1), said signal analysis changes, whereby the failure is indicated.

2. A Doppler very high frequency omnidirectional range as claimed in claim 1, characterized by an additional pair of mixers (14', 15') consisting of a mixer (14') fed with a portion of the carrier signal and a portion of the upper sideband signal and a mixer (15') fed with a portion of the carrier signal and a portion of the lower sideband signal, by an additional coupler (10) which is contained in the feeder for the carrier antenna (2) located at the center of the circle and extracts a portion (T2'') of the carrier signal, which portion is fed to the additional pair of mixers, and by a phase-measuring device (16) which measures the phase difference between the output signals from said mixers (14', 15').

3. A Doppler very high frequency omnidirectional range as claimed in claim 2, characterized by control of the phases of the sideband signals in the sideband-signal sources (8, 9) if the measured phase difference deviates from a desired value.

4. A Doppler very high frequency omnidirectional range as claimed in any one of claims 1 to 3, characterized by monitoring of the amplitude modulation of the carrier signal, monitoring of the frequency deviation of the FM signal, and monitoring of the modulation factor of the 9960-Hz subcarrier signal, in addition to the Fourier analysis of the output signal from the summing stage.

5. A Doppler very high frequency omnidirectional range as claimed in claim 4, characterized in that the monitoring is performed on a time-division multiplex basis.

6. A Doppler very high frequency omnidirectional range as claimed in any one of claims 1 to 5, characterized by a threshold for the absolute value of the sum of the harmonics of the rectified 9960-Hz subcarrier, the transgression of which threshold indicates a failure of one or more antennas.

7. A Doppler very high frequency omnidirectional range as claimed in any one of claims 1 to 6, characterized in that the directional couplers (6, 61, 7, 71) are bidirectional couplers (10, 600, 700).

8. A Doppler very high frequency omnidirectional range as claimed in any one of claims 2 to 7, characterized in that the measurements of the phase differences between the output signals from the first mixers (14, 15) and between the output signals from the additional mixers (14', 15') are made using time-division multiplexing, such that the measurement of the phase difference between the output signals from the first mixers is performed more frequently than the measurement of the phase difference between the output signals from the additional mixers.

9. Doppler very high frequency omnidirectional range (DVOR) comprising a plurality of sideband antennas (1) arranged about the perimeter of a circle and a carrier antenna (2) located at the center of said circle wherein sideband-signal sources (8, 9) and an antenna switching unit (3) interposed between said sideband-signal sources and the sideband antennas (1) are provided for applying an upper sideband signal (USB) and a lower sideband signal (LSB) to the sideband antennas, wherein a monitoring facility is provided for monitoring the radiated signals, said monitoring facility including an evaluating circuit (301), two or more directional couplers, and two or more mixers, namely a first directional coupler which couples out a small portion (USB') of the upper sideband signal (USB) and feeds it to a first one (14) of the mixers, a second directional coupler which couples out a small portion (LSB') of the lower sideband signal (LSB) and feeds it to a second one (15) of the mixers, and at least a third directional coupler which couples a first portion (T') of the carrier signal received by a sideband antenna (1) out of a first feeder (100) over which the carrier signal is transferred from the antenna, and feeds it to said first one (14) of the two mixers, wherein the monitoring facility further includes a monitoring dipole (102) and a phase comparator (16) to which the mixer output signals are applied and in which the phase difference between the mixer output signals is determined, and wherein the evaluating circuit is arranged to determine the deviations of the measured phase difference from a desired value, **characterized in** that the monitoring facility includes a 3-dB hybrid, a third (402) and a fourth (404) mixer, two bandpass filter (405, 406), and two frequency discriminators (407, 408), that the signal received by the monitoring dipole (102) is applied to a first input of the 3-dB hybrid (401), that the second input of the 3-dB hybrid is supplied with a portion of the carrier signal, that the output of the 3-dB hybrid is applied to the first inputs of the third and fourth mixers (402, 404), that the second input of the third mixer (402) is supplied with the small portion of the lower sideband signal, while the second input of the fourth mixer (404) is supplied with the small portion of the upper sideband signal, that the outputs of the third and fourth mixers are each applied to one of the bandpass filters (405, 406), that the center frequencies of the bandpass filters are approximately equal to twice the value by which the frequencies of the sideband signals differ from the frequency of the carrier signal, that the output of each of the bandpass filters is applied to one of the two frequency discriminators (407, 408), and that the evaluating circuit is arranged to perform a Fourier analysis of the output signals from the frequency discriminators.

10. A Doppler very high frequency omnidirectional range as claimed in claim 9, characterized by a differential amplifier (413) having its inputs connected to the outputs of the frequency discriminators (407, 408) and having its output coupled to the evaluating circuit.

11. A Doppler very high frequency omnidirectional range as claimed in claim 9 or 10, characterized by extraction of only a portion of the carrier signal for monitoring the parameters RF level of the carrier signal, 30-Hz amplitude modulation of the carrier signal, and presence of station identification, with the evaluating circuit evaluating the rectified carrier signal.

12. A Doppler very high frequency omnidirectional range as claimed in claim 1, characterized in that the monitoring dipole (102) delivers the carrier signal.

13. A Doppler very high frequency omnidirectional range as claimed in claim 11, characterized in that the feeder (500) between the carrier-signal source (11) and the carrier antenna (2) delivers said portion (T'') of the carrier signal.

14. A Doppler very high frequency omnidirectional range as claimed in any one of claims 9 to 13, characterized in that, to monitor the level of the radiated upper and lower sideband signals received by the carrier antenna (2), the evaluating circuit evaluates the signals coupled out of the feeder (500) between the carrier-signal source (11) and the carrier antenna (2) and rectified in a rectifier (503).

**Revendications**

1. Radiobalise tournante du type Doppler (DVOR) comprenant plusieurs antennes de bande latérale (1) disposées en cercle et une antenne d'onde porteuse disposée au centre du cercle (2), dans laquelle des sources de signaux de bande latérale (8, 9) et un dispositif de commutation d'antenne (3) disposé entre ces sources de signaux de bande latérale et les antennes de bande latérale (1), afin d'alimenter les antennes de bande latérale avec un signal de bande latérale supérieur (USB) et avec un signal de bande latérale inférieur (LSB), dans laquelle est prévu un dispositif de surveillance pour surveiller les signaux émis, ce dispositif de surveillance comprenant un circuit d'évaluation (301), plusieurs coupleurs hybrides et plusieurs mélangeurs, à savoir un premier coupleur hybride, prévu pour l'extraction d'une faible partie (USB') du signal de bande latérale supérieur (USB) et pour fournir ce signal à un premier mélangeur (14), un deuxième coupleur hybride prévu pour extraire une faible partie (LSB') du signal de bande latérale inférieur (LSB) et pour fournir ce signal au deuxième (15) desdits mélangeurs, un troisième coupleur hybride prévu pour extraire une première partie (T') d'un signal d'onde porteuse reçu d'une antenne de bande latérale (1), à partir d'une première ligne d'alimentation (100) au moyen de laquelle le signal d'onde porteuse est transféré de l'antenne et amené à un premier (14) des deux mélangeurs, dans laquelle le dispositif de surveillance comporte un dispositif de comparaison de phase (16), auquel sont adressés les signaux de sortie des mélangeurs et, dans lequel on détermine la différence de phase entre les signaux de sortie des mélangeurs, et dans lequel le circuit d'évaluation est agencé de manière à déterminer les déviations de la différence de phase mesurée par rapport à une valeur de consigne, caractérisée en ce que le dispositif de surveillance comporte au moins un quatrième coupleur hybride qui extrait une deuxième partie (T') du signal d'onde porteuse reçu d'une antenne de bande latérale (1) d'une deuxième ligne d'alimentation (200) pour le deuxième des deux signaux de bande latérale et transfère cette partie vers le deuxième des deux mélangeurs, et en ce que le dispositif de surveillance contient en plus un étage de sommation (300) connecté aux deux sorties desdits mélangeurs, et en ce que le circuit d'évaluation est conçu de façon à réaliser une analyse de Fourier du signal de sortie dudit étage de sommation (300), de manière qu'en cas de défaillance d'une ou de plusieurs antennes de bande latérale (1), cette analyse de signal subisse un changement indicatif de cette défaillance.

2. Radiobalise tournante selon la revendication 1, caractérisée en ce qu'elle comporte deux mélangeurs supplémentaires (14', 15'), comprenant un mélangeur (14') recevant une partie du signal d'onde porteuse et une partie du signal de bande latérale supérieur, et comportant un mélangeur (15') recevant une partie du signal d'onde porteuse et une partie du signal de bande latérale inférieur, et en ce qu'il comporte encore un coupleur (10) qui est introduit dans la ligne d'alimentation de l'antenne d'onde porteuse (2) disposée au centre dudit cercle, et qui extrait une partie (T'') du signal d'onde porteuse, qui est adressée aux paires supplémentaires de mélangeurs, et en ce qu'un dispositif de mesure de phase (16) est prévu pour mesurer la différence de phase entre les signaux de sortie des mélangeurs (14', 15').

3. Radiobalise tournante selon la revendication 1, caractérisée en ce qu'un réglage des phases des signaux de bande latérale est réalisé dans les sources (8, 9) des signaux de bande latérale dans le cas où la différence mesurée de phase subit une déviation d'une valeur de consigne.

4. Radiobalise tournante selon l'une des revendications 1 à 3, caractérisée en ce que l'on procède à une surveillance de la modulation en amplitude du signal d'onde porteuse, une surveillance de l'excursion en fréquence du signal FM et une surveillance du niveau de modulation du signal de l'onde porteuse auxiliaire à 9 960 Hz, en plus de l'analyse de Fourier du signal de sortie dudit étage de sommation.

5. Radiobalise tournante selon la revendication 4, caractérisée en ce que la surveillance est effectuée sur un signal de multiplexage temporel.

6. Radiobalise tournante selon l'une des revendications 1 à 5, caractérisée en ce que l'on établit une valeur de seuil pour la somme des harmoniques de l'onde porteuse auxiliaire à 9 960 Hz redressée, et en ce que le dépassement de cette valeur de seuil est indicatif de la défaillance de l'une ou de plusieurs des antennes.

7. Radiobalise tournante selon l'une des revendications 1 à 6, caractérisée en ce que les coupleurs hybrides (6, 10, 61, 7, 71) sont des coupleurs hybrides bidirectionnels (10, 600, 700).

8. Radiobalise tournante selon l'une des revendications 1 à 7, caractérisée en ce que la mesure de phase entre les signaux de sortie des premiers mélangeurs (14, 15) et les signaux de sortie des mélangeurs supplémentaires (14', 15') est réalisée dans le signal de multiplexage temporel de telle sorte que la mesure de la différence de phase entre les signaux de sortie des premiers mélangeurs, se produit plus souvent que la mesure de phase entre les signaux de sortie des mélangeurs supplémentaires.

9. Une radiobalise tournante du type Doppler (DVOR) comprenant plusieurs antennes de bande latérale (1), disposées en cercle, et une antenne d'onde porteuse disposée au centre du cercle (2), dans laquelle des sources de signaux de bande latérale (8, 9) et un dispositif de commutation d'antenne (3) disposé entre ces sources de signaux de bande latérale et les antennes de bande latérale (1), afin d'alimenter les antennes de bande latérale avec un signal de bande latérale supérieur (USB) et avec un signal de bande latérale inférieur (LSB), dans laquelle est prévu un dispositif de surveillance pour surveiller les signaux émis, ce dispositif de surveillance comprenant un circuit d'évaluation (301), plusieurs coupleurs hybrides et plusieurs mélangeurs, à savoir un premier coupleur hybride, prévu pour l'extraction d'une faible partie (USB') du signal de bande latérale supérieur (USB) et pour fournir ce signal à un premier mélangeur (14), un deuxième coupleur hybride prévu pour extraire une faible partie (LSB') du signal de bande latérale inférieur (LSB) et pour fournir ce signal au deuxième (15) desdits mélangeurs, et au moins un troisième coupleur hybride prévu pour extraire une première partie (T') d'un signal d'onde porteuse reçu d'une antenne de bande latérale (1), à partir d'une première ligne d'alimentation (100) au moyen de laquelle la signal d'onde porteuse est transféré de l'antenne et amené à un premier (14) des deux mélangeurs, dans lequel le dispositif de surveillance comporte un dispositif de comparaison de phase (16), auquel sont adressés les signaux de sortie des mélangeurs et, dans lequel on détermine la différence de phase entre les signaux de sortie des mélangeurs, et dans lequel le circuit d'évaluation est agencé de manière à déterminer les déviations de la différence de phase mesurée par rapport à une valeur de consigne, caractérisée en ce que le dispositif de surveillance comporte une jonction hybride à 3dB, un troisième (402) et un quatrième (404) mélangeurs, deux circuits passe-bande (405, 406) et deux discriminateurs de fréquence (407, 408), en ce que le signal reçu par une antenne dipôle de surveillance (102) est appliqué à une première entrée de ladite jonction hybride à 3dB (401), la deuxième entrée de la jonction hybride à 3dB reçoit une partie du signal d'onde porteuse, que le signal de sortie de la jonction hybride à 3dB est respectivement appliqué à la première entrée des troisième et quatrième mélangeurs (402, 404), que la petite partie du signal de bande latérale inférieur est appliquée à la deuxième entrée du troisième mélangeur (402) et la petite partie du signal de bande latérale supérieur est appliquée à la deuxième entrée du quatrième mélangeur (404) respectivement, que le signal de sortie des troisième et quatrième mélangeurs est appliqué aux filtres passe-bande associés (405, 406), que les fréquences centrales des bandes passantes sont d'environ le double de la valeur de la différence entre la fréquence des signaux de bande latérale et la fréquence du signal d'onde porteuse, que le signal de sortie de chaque circuit passe-bande est appliqué respectivement aux discriminateurs de fréquence (407, 408) associés, et en ce que le circuit d'évaluation est agencé de manière à ce qu'une analyse de Fourier est réalisée sur les signaux de sortie des discriminateurs de fréquence.

10. Radiobalise tournante selon la revendication 9, caractérisée en ce qu'un amplificateur différentiateur (413) est disposé entre les discriminateurs de fréquence (407, 408) et le circuit d'évaluation, l'entrée dudit amplificateur étant connectée aux sorties des discriminateurs de fréquence et sa sortie étant connectée au circuit d'évaluation.

11. Radiobalise tournante selon la revendication 9 ou 10, caractérisée en ce qu'une partie du signal d'onde porteuse est prélevée par couplage afin de surveiller les paramètres niveau HF du signal d'onde porteuse et la modulation en amplitude à 30 Hz du signal d'onde porteuse avec reconnaissance de la station concernée, le circuit d'évaluation réalisant son évaluation sur le signal d'onde porteuse redressé.

12. Radiobalise tournante selon la revendication 1, caractérisée en ce que l'antenne dipôle de surveillance (102) fournit le signal d'onde porteuse.

13. Radiobalise tournante selon la revendication 11, caractérisée en ce que la ligne d'alimentation (500) qui se trouve entre la source du signal d'onde porteuse (11) et l'antenne (2) d'onde porteuse fournit la partie (T'') du signal d'onde porteuse.

14. Radiobalise tournante selon l'une quelconque des revendications 9 à 13, caractérisée en ce que le circuit d'évaluation pour la surveillance de niveau des signaux de bande latérale supérieur émis et de bande latérale inférieur émis, qui sont reçus par l'antenne d'onde porteuse (2), effectue ladite évaluation sur des signaux prélevés sur la ligne d'alimentation (500) entre la source du signal d'onde porteuse (11) et l'antenne d'onde porteuse (2) après redressement au moyen d'un redresseur (503).

FIG 1

FIG.2

EP 0 170 231 B1

EP 0 170 231 B1

FIG.3